# EUROPEAN PATENT SPECIFICATION

(11) **EP 0 454 270 B1**
(45) Date of publication and mention of the grant of the patent: **15.12.1993**
(21) Application number: 91201007.1
(22) Date of filing: 25.04.1991
(51) Int. Cl.: B01J 31/24, C08G 67/02

(54) **Catalyst compositions**
Katalytische Zusammensetzungen
Compositions catalytiques

(30) Priority: 27.04.1990 NL 9001019
(43) Date of publication of application: 30.10.1991
(73) Proprietor: SHELL INTERNATIONALE RESEARCH MAATSCHAPPIJ B.V., 2596 HR Den Haag (NL)
(72) Inventor: Keijsper, Johannes Jacobus, NL-1031 CM Amsterdam (NL); Van der Made, Alexander Willem, NL-1031 CM Amsterdam (NL)

(56) References cited:
- EP-A- 0 320 269
- EP-A- 0 379 260
- EP-A- 0 380 162
- US-A- 4 397 787

## Description

The invention relates to novel catalyst compositions suitable for use in the preparation of polymers of carbon monoxide with one or more olefinically unsaturated compounds.

It is known that linear polymers of carbon monoxide with one or more olefinically unsaturated compounds in which polymers the units from carbon monoxide on the one hand and the units from the olefinically unsaturated compounds on the other hand are present in a substantially alternating arrangement, can be prepared by contacting the monomers with a catalyst composition containing a Group VIII metal and a bisphosphine with the general formula (R¹)₂P-R-P(R¹)₂ in which R¹ represents an aromatic hydrocarbonyl group and R is a divalent bridging group containing just three carbon atoms in the bridge, of which the central carbon atom forms part of a -CH₂- group.

In the aforesaid polymer preparation, both the polymerization rate and the average molecular weight of the resulting polymers play an important role. On the one hand it is desirable for the polymer preparation to achieve the highest possible reaction rate, while on the other hand, with a view to their applications, polymers are more valuable the higher their average molecular weight. Both the reaction rate and the average molecular weight can be influenced by the temperature employed in the polymerization. Unfortunately, the effect of the temperature on the polymerization rate and on the average molecular weight is in opposite directions, in the sense that an increase in the reaction temperature leads to an increase in the reaction rate, but also to a decrease in the average molecular weight of the resulting polymers, assuming that other reaction conditions remain unchanged. In practice, this means that with a view to the application of the polymers the reaction temperature is chosen so as to obtain polymers with an average molecular weight that is sufficiently high for the particular application and that the reaction rate corresponding to that temperature has to be accepted.

In previous research by the Applicant into the aforementioned catalyst compositions it was found (cf. EP-A-257 663) that their behaviour as regards the relationship between the obtained reaction rate and average molecular weight of the prepared polymers could be improved by replacing the bisphosphine having the general formula (R¹)₂P-R-P(R¹)₂ by a bisphosphine having the general formula (R²)₂P-R-P(R²)₂ in which R² represents an aryl group containing at least one alkoxy substituent at the ortho position relative to the phosphorus atom to which the aryl group is linked.

In the course of continued research into the last-mentioned catalyst compositions it has now been found that their behaviour as regards the relationship between the reaction rate and the average molecular weight of the prepared polymers could still be improved substantially by replacing the bisphosphine having the general formula (R²)₂P-R-P(R²)₂ by a bisphosphine having the general formula (R²)₂P-R³-P(R²)₂ in which R³ is a divalent bridging group containing just three carbon atoms in the bridge, of which the central carbon atom forms part of a -CHR⁴ group in which R⁴ represents a monovalent substituent comprisig carbon and hydrogen and optionally oxygen. A comparison of the behaviour of the original catalyst compositions containing a bisphosphine having the general formula (R²)₂P-R-P(R²)₂ with that of the modified catalyst compositions containing a bisphosphine having the general formula (R²)₂P-R³-P(R²)₂ shows that at a reaction rate that is equal for both compositions, polymers with a higher average molecular weight can be prepared with the modified compositions, or that when using both compositions for the preparation of polymers with equal average molecular weight, the modified compositions cause a higher reaction rate. This is considered to be surprising in view of the fact that replacement of a bisphosphine with the general formula (R¹)₂P-R-P(R¹)₂ by a bisphosphine with the general formula (R¹)₂P-R³-P(R¹)₂ results in a deterioration of the relationship between the obtained reaction rate and the average molecular weight of the prepared polymers, as was found earlier by the Applicant.

Catalyst compositions containing a Group VIII metal and a bisphosphine with the general formula (R²)₂P-R³-P(R²)₂ are novel.

The present patent application therefore relates to novel catalyst compositions containing a Group VIII metal and a bisphosphine with the general formula (R²)₂P-R³-P(R²)₂ in which R² represents an aryl group containing at least one alkoxy substituent at the ortho position relative to the phosphorus atom to which the aryl group is linked and in which R³ is a divalent bridging group containing just three carbon atoms in the bridge, of which the central carbon atom forms part of a -CHR⁴- group in which R⁴ represents a monovalent substituent comprising carbon, hydrogen and optionally oxygen.

The patent application further relates to the application of these catalyst compositions in the preparation of polymers of carbon monoxide with one or more olefinically unsaturated compounds.

A number of the bisphosphines with the general formula (R²)₂P-R³-P(R²)₂ which are suitable for use in the catalyst compositions according to the invention are, moreover, novel compounds. The present patent application also relates to these novel compounds and to their preparation. One of the dihalides obtained as intermediate product during the preparation of the novel bisphosphines is also a novel compound. The patent application finally relates to this novel compound and to its preparation.

In this patent application, Group VIII metals are understood to be the noble metals ruthenium, rhodium, palladium, osmium, iridium and platinum, as well as the iron group metals iron, cobalt and nickel. The Group VIII metal in the catalyst compositions according to the invention is preferably chosen from palladium, nickel and cobalt. Palladium is particularly preferred as a Group VIII metal. The inclusion of a Group VIII metal in the catalyst compositions is preferably in the form of a salt of a carboxylic acid, in particular in the form of an acetate. In addition to a Group VIII metal and a bisphosphine, the catalyst compositions according to the invention preferably also contain an anion of an acid with a pKa of less than 4 and in particular an anion of an acid with a pKa of less than 2. Examples of acids with a pKa of less than 2 are sulphuric acid, perchloric acid, sulphonic acids such as methanesulphonic acid, trifluoromethanesulphonic acid and para-toluenesulphonic acid, and halocarboxylic acids such as trichloroacetic acid, difluoroacetic acid and trifluoroacetic acid. A sulphonic acid such as para-toluenesulphonic acid or a halocarboxylic acid such as trifluoroacetic acid is preferred. The anion can be introduced into the catalyst compositions either in the form of a compound from which the desired anion splits off or in the form of a mixture of compounds from which the desired anion is formed by mutual reaction. As a rule, the anion is included in the catalyst compositions in the form of an acid. If desired, the anion can also be included in the catalyst composition in the form of a main group metal salt or non-noble transition metal salt of the acid in question. If an anion of a carboxylic acid is chosen, its inclusion in the catalyst composition can take place in the form of the acid or in the form of a derivative thereof, such as an alkyl or aryl ester, an amide, an imide, an anhydride, an ortho-ester, a lactone, a lactam or an alkylidene dicarboxylate. The anion is preferably present in the catalyst compositions in a quantity of 1-100 and in particular 2-50 mol per gat Group VIII metal. Except by application as a separate component, the anion of an acid with a pKa of less than 4 can also be present in the catalyst compositions by the use of for example palladium trifluoroacetate or palladium para-tosylate as Group VIII metal compound.

In addition to a Group VIII metal, a bisphosphine and optionally an anion of an acid with a pKa of less than 4, the catalyst compositions according to the invention can also contain an organic oxidizing agent. Examples of suitable organic oxidizing agents are 1,2-and 1,4-quinones, aliphatic nitrites such as butyl nitrite and aromatic nitrocompounds such as nitrobenzene and 2,4-dinitrotoluene. 1,4-benzoquinone and 1,4-naphthoquinone are preferred. The quantity of organic oxidizing agent employed is preferably 5-5000 and in particular 10-1000 mol per gat Group VIII metal.

In the catalyst compositions according to the invention the bisphosphine is preferably present in a quantity of 0.5-2 and in particular 0.75-1.5 mol per gat Group VIII metal. In the bisphosphine the R² group is preferably a phenyl group containing at least one methoxy substituent in the ortho position relative to the phosphorus atom to which the phenyl group is linked. Examples of such R² groups are the 2-methoxyphenyl group, the 2,4-dimethoxyphenyl group, the 2,6-dimethoxyphenyl group and the 2,4,6-trimethoxyphenyl group. Bisphosphines are preferred in which the R² group is a 2-methoxyphenyl group. Also preferred are bisphosphines in which the R³ bridge group is a -CH₂-CHR⁴-CH₂- group. Examples of suitable R⁴ groups are aryl groups such as the phenyl group, aralkyl groups such as the benzyl group, alkyl groups such as the propyl group, aralkyloxy groups such as the benzyloxy group and the 2,4,6-trimethylbenzyloxy group, alkoxyalkoxy groups such as the ethoxymethoxy group and hydroxyalkyl groups such as the 6-hydroxyhexyl group.

Bisphosphines of the general formula (R²)₂P-CH₂-CHR⁴-CH₂-P(R²)₂ in which R⁴ represents an aryl, an aralkyl, an alkyl, an aralkyloxy or an alkoxyalkoxy group are novel compounds. The present patent application also relates to these novel compounds and to the preparation thereof. The preparation of each of these compounds can take place by the reaction of an alkali metal diaryl phosphide with the general formula MP(R²)₂ in which M represents an alkali metal such as sodium with a dihalide with the general formula CH₂X-CHR⁴-CH₂X in which X represents a halogen such as chlorine or bromine. The alkali metal diaryl phosphides needed for the synthesis of the novel bisphosphines can be obtained by the reaction in liquid ammonia of an alkali metal M with a trisphosphine with the general formula (R²)₃P. The preparation of the dihalides needed for the synthesis of the novel bisphosphines is dependent on the nature of the R⁴ group contained therein. If the R⁴ group is an alkyl, aryl or aralkyl group, the desired dihalides can be prepared by the conversion - first by the reduction with for example lithium aluminium hydride - of a dialkylmalonic ester containing an R⁴ group as a substituent on the central carbon atom to the corresponding dihydroxy compound and then converting this by halogenation for example with phosphorus tribromide or with hydrobromic acid into the corresponding dihalide. If the R⁴ group is an aralkyloxy group, the desired dihalides can be prepared by reacting an aralkylhalide with an epihalohydrin such as epibromohydrin. If the R⁴ group is an alkoxyalkoxy group, the desired dihalides can be prepared by reacting a haloalkylalkyl ether with an epihalohydrin such as epichlorohydrin.

Novel bisphosphines according to the invention include:
a) 2-phenyl-1,3-bis[bis(2-methoxyphenyl)phosphino]-propane,
b) 2-benzyl-1,3-bis[bis(2-methoxyphenyl)phosphino]-propane,
c) 2-propyl-1,3-bis[bis(2-methoxyphenyl)phosphino]-propane,
d) 2-benzyloxyl-1,3-bis[bis(2-methoxyphenyl)phosphino]propane,
e) 2-(2,4,6-trimethylbenzyloxy)-1,3-bis[bis(2-methoxyphenyl)phosphino]propane and
f) 2-ethoxymethoxy-1,3-bis[bis(2-methoxyphenyl)-phosphino]propane.

Each of these compounds was prepared by reacting sodium di(2-methoxyphenyl)phosphide, obtained by the reaction in liquid ammonia of sodium with tris(2-methoxyphenyl)phosphine, with one of the following dihalides.

For the preparation of the bisphosphine mentioned under a), use was made of 2-phenyl-1,3-dibromopropane obtained from 2-phenylmalonic acid by esterifying this with ethanol, reducing the thus obtained 2-phenyldiethyl malonate with lithium aluminium hydride to 2-phenyl-1,3-dihydroxypropane and brominating this compound with phosphorus tribromide.

For the preparation of the bisphosphine mentioned under b), use was made of 2-benzyl-1,3-dibromopropane obtained from diethyl malonate by converting this with benzyl chloride and sodium methanolate to 2-benzyldiethyl malonate, reducing this compound with lithium aluminium hydride to 2-benzyl-1,3-dihydroxypropane, followed by bromination with hydrobromic acid.

For the preparation of the bisphosphine mentioned under c), use was made of 2-propyl-1,3-dibromopropane obtained from 2-propyldiethyl malonate by reducing this compound with lithium aluminium hydride to 2-propyl-1,3-dihydroxypropane, followed by brominating with hydrobromic acid.

For the preparation of the bisphosphine mentioned under d), use was made of 2-benzyloxy-1,3-dibromopropane obtained by the reaction of benzyl bromide with epibromohydrin.

For the preparation of the bisphosphine mentioned under e), use was made of 2-(2,4,6-trimethylbenzyloxy)-1,3-dibromopropane obtained from mesitylene by converting this with paraformaldehyde and hydrobromic acid to bromomethyl-2,4,6-trimethylbenzene and reacting this compound with epibromohydrin. The compound 2-(2,4,6-trimethylbenzyloxy)-1,3-dibromopropane is novel.

For the preparation of the bisphosphine mentioned under f), use was made of 2-ethoxymethoxy-1,3-dichloropropane obtained by the reaction of ethylchloromethyl ether with epichlorohydrin.

The polymerization by the use of the catalyst compositions according to the invention is preferably carried out by contacting the monomers with a solution of the catalyst composition in a diluent in which the polymers are almost or entirely insoluble. Lower alcohols such as methanol are very suitable as diluents. If desired, the polymerization can also be conducted in the gas phase. Olefinically unsaturated compounds which can be polymerized with carbon monoxide with the aid of the catalyst compositions according to the invention can either be compounds consisting exclusively of carbon and hydrogen or compounds containing in addition to carbon and hydrogen one or more heteroatoms. The catalyst compositions according to the invention are preferably employed in the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The catalyst compositions according to the invention are especially very suitable for use in the preparation of copolymers of carbon monoxide with ethene and the preparation of terpolymers of carbon monoxide with ethene and an α-olefin, in particular propene.

The quantity of catalyst compositions used in the polymerization can vary within wide limits. A quantity of catalyst is employed per mol olefinically unsaturated compound to be polymerized which contains 10⁻⁷-10⁻³ and in particular 10⁻⁶-10⁻⁴ gat Group VIII metal.

The preparation of the polymers is preferably carried out at a temperature of 25-150 °C and a pressure of 2-150 bar and in particular at a temperature of 30-130 °C and a pressure of 5-100 bar. The molar ratio of the olefinically unsaturated compounds relative to carbon monoxide in the mixture to be polymerized is preferably 10:1 to 1:10 and in particular 5:1 to 1:5. The polymerization can be carried out either batchwise or continuously.

The higher the average molecular weight of the present polymers, the higher will be the intrinsic viscosity that they, as a rule, exhibit. For the determination of the intrinsic viscosity of the present polymers, first four solutions are prepared by dissolving the polymer in four different concentrations in meta-cresol. For each of the solutions the viscosity at 60 °C relative to meta-cresol at 60 °C is determined in a viscometer. If Tₒ represents the outflow time of meta-cresol and Tₚ the outflow time of the polymer solution, the relative viscosity (ηᵣₑₗ) is obtained from ηᵣₑₗ = Tₚ/Tₒ. The inherent viscosity (ηᵢₙₕ) can be calculated from ηᵣₑₗ according to the formula ηᵢₙₕ = (ln ηᵣₑₗ)/c where c represents the concentration of the polymer in grams per 100 ml solution.

The intrinsic viscosity [η] in dl/g can now be found by graphically plotting ηᵢₙₕ for each of the four polymer solutions against the corresponding concentration (c) and then extrapolating to c = 0.

In this patent application the designation "Limiting Viscosity Number" (LVN), recommended by the International Union of Pure and Applied Chemistry, will hereinafter be used instead of "intrinsic viscosity".

The invention will now be explained with reference to the following examples.

### Example 1

2-benzyldiethyl malonate was prepared as follows.

49.5 g (0.31 mol) diethyl malonate was added to a solution of 0.3 mol sodium methanolate in 200 ml absolute ethanol at such a rate that the mixture boiled gently under reflux. Then 37.98 g (0.30 mol) benzyl chloride was added over a period of 1 hour and the mixture was boiled for 2 hours under reflux. After the mixture had been concentrated, 100 ml water was added. The raw ester was extracted twice, each time with 100 ml chloroform, dried over magnesium sulphate and distilled. The yield of 2-benzyldiethyl malonate was 50 g (66%).

### Example 2

2-phenyldiethyl malonate was prepared by esterifying 2-phenylmalonic acid in toluene with ethanol in the presence of a catalytic quantity of sulphuric acid. The 2-phenyldiethyl malonate was purified by distillation. Yield 90%.

### Example 3

2-benzyl-1,3-dihydroxypropane was prepared as follows.

25.07 g (0.1 mol) of the 2-benzyldiethyl malonate prepared according to example 1 was dissolved in 100 ml diethyl ether. This solution was added to a solution of 0.105 mol lithium aluminium hydride in 105 ml diethyl ether at such a rate that the mixture boiled gently under reflux. After completion of the addition, the mixture was boiled under reflux for a further hour and then 9.8 ml ethyl acetate was added. The resulting white solid was separated, dissolved in dilute sulphuric acid and the solution was extracted six times with 100 ml diethyl ether. The organic solution was dried above magnesium sulphate, concentrated and distilled. Yield of 2-benzyl-1,3-dihydroxypropane 11 g (66%).

### Example 4

2-phenyl-1,3-dihydroxypropane was prepared in virtually the same manner as the 2-benzyl-1,3-dihydroxypropane in example 3, but starting from 2-phenyldiethyl malonate prepared according to example 2 instead of from 2-benzyldiethyl malonate. Yield of 2-phenyl-1,3-dihydroxypropane 59%.

### Example 5

2-propyl-1,3-dihydroxypropane was prepared in virtually the same manner as the 2-benzyl-1,3-dihydroxypropane in example 3, but starting from commercially available 2-propyldiethyl malonate. Yield of 2-propyl-1,3-dihydroxypropane 50%.

### Example 6

2-benzyl-1,3-dibromopropane was prepared as follows. To a mixture of 25 g of a 48% aqueous solution of hydrobromic acid and 7.5 g concentrated sulphuric acid was added 10 g (0.06 mol) of the 2-benzyl-1,3-dihydroxypropane prepared according to example 3. After addition of 6 g concentrated sulphuric acid, the mixture was boiled for 3.5 hours under reflux. After cooling and adding water, the mixture was extracted three times with dichloromethane. The organic layer was washed successively with water, a 5% aqueous solution of sodium bicarbonate and again with water, dried above magnesium sulphate and distilled. Yield of 2-benzyl-1,3-dibromopropane 12 g (68%).

### Example 7

2-phenyl-1,3-dibromopropane was prepared as follows. To an ice-cooled and stirred mixture of 0.1 g pyridine and 0.065 mol of the 2-phenyl-1,3-dihydroxypropane prepared according to example 4 was added slowly 0.13 mol phosphorus tribromide. The mixture was stirred at room temperature for 5 days and then heated for 2 hours at 100 °C. The mixture was poured out onto ice and extracted with dichloromethane. The organic layer was washed successively with water, a 10% aqueous solution of sodium bicarbonate and again with water, dried with magnesium sulphate and distilled. Yield of 2-phenyl-1,3-dibromopropane 71%.

### Example 8

2-propyl-1,3-dibromopropane was prepared in virtually the same manner as the 2-benzyl-1,3-dibromopropane in example 6, but starting from 2-propyl-1,3-dihydroxypropane prepared according to example 5 instead of from 2-benzyl-1,3-dihydroxypropane. Yield of 2-propyl-1,3-dibromopropane 62%.

### Example 9

Bromomethyl-2,4,6-trimethylbenzene was prepared as follows. To a mixture of 12.0 g (0.10 mol) mesitylene, 3.08 g (0.10 mol) paraformaldehyde and 50 ml 99.7% glacial acetic acid was added rapidly 20 ml of a 31% solution of hydrobromic acid in acetic acid. The mixture was kept at 45 °C for 2 hours and then poured out into 100 ml water. The solid material was filtered off and washed with pentane. Yield of bromomethyl-2,4,6-trimethylbenzene 20.0 g (94%).

### Example 10

2-benzyloxy-1,3-dibromopropane was prepared as follows. A mixture of 24.6 g (0.18 mol) epibromohydrin, 29 g (0.17 mol) benzyl bromide and 20 mg mercury (II) chloride was heated for 8 hours at 160 °C. The reaction mixture was distilled under reduced pressure. Yield of 2-benzyloxy-1,3-dibromopropane 57%.

### Example 11

2-ethoxymethoxy-1,3-dichloropropane was prepared as follows. 0.1 mol freshly distilled ethylchloromethyl ether was added slowly to an ice-cooled mixture of 0.1 mol epichlorohydrin and 10 mg mercury(II) chloride. After being left for 12 hours at room temperature, the reaction mixture was distilled. Yield of 2-ethoxymethoxy-1,3-dichloropropane 96%.

### Example 12

2-(2,4,6-trimethylbenzyloxy)-1,3-dibromopropane was prepared in virtually the same manner as the 2-benzyloxy-1,3-dibromopropane in example 10, but starting from the bromomethyl-2,4,6-trimethylbenzene prepared according to example 9 instead of from benzyl bromide. Yield of 2-(2,4,6-trimethylbenzyloxy)-1,3-dibromopropane 90%.

### Example 13

2-benzyl-1,3-bis[bis(2-methoxyphenyl)phosphino]-propane was prepared as follows. (All steps were carried out under argon.) To 125 ml dry ammonia which was kept at -78 °C were added 0.4 g (17.5 mmol) sodium, 3.1 g (8.75 mmol) tris(2-methoxyphenyl)phosphine and 12.5 ml tetrahydrofuran dried with sodium. After 6 hours stirring at -78 °C, 0.467 g (8.75 mmol) ammonium chloride was added. After 30 minutes, 1.26 g (4.3 mmol) of the 2-benzyl-1,3-dibromopropane prepared according to example 6 dissolved in 50 ml tetrahydrofuran was added. After evaporation of ammonia, the reaction mixture was purified as follows (purification procedure 1). The solvent was removed under reduced pressure. The remaining solid material was dissolved in 50 ml dichloromethane and washed with 50 ml of a 5% aqueous solution of ammonium chloride. Subsequently, the solvent was reduced and 50 ml tetrahydrofuran was added. The solution was filtered, concentrated to 10 ml and 50 ml methanol was added, causing the bisphosphine to precipitate. Yield of 2-benzyl-1,3-bis[bis(2-methoxyphenyl)phosphino]propane 2.53 g (95%).

If desired, the reaction mixture can also be purified as follows (purification procedure 2). 50 ml diethyl ether is added to the reaction mixture and the suspension is centrifuged for 5 minutes at 3300 rpm. After concentration of the solution, methanol is added, causing the bisphosphine to precipitate.

### Example 14

2-phenyl-1,3-bis[bis(2-methoxyphenyl)phosphino]-propane was prepared in virtually the same manner as the 2-benzyl-1,3-bis[bis(2-methoxyphenyl)phosphino]-propane in example 13, except that the 2-phenyl-1,3-dibromopropane prepared according to example 7 was used instead of 2-benzyl-1,3-dibromopropane. Yield of 2-phenyl-1,3-bis[bis(2-methoxyphenyl)phosphino]propane 90%.

### Example 15

2-propyl-1,3-bis[bis(2-methoxyphenyl)phosphino]-propane was prepared in virtually the same manner as the 2-benzyl-1,3-bis[bis(2-methoxyphenyl)phosphino]-propane in example 13, except that the 2-propyl-1,3-dibromopropane prepared according to example 8 was used instead of 2-benzyl-1,3-dibromopropane. Yield of 2-propyl-1,3-bis[bis(2-methoxyphenyl)phosphino]propane 90%.

### Example 16

2-benzyloxy-1,3-bis[bis(2-methoxyphenyl)-phosphino]propane was prepared in virtually the same manner as the 2-benzyl-1,3-bis[bis(2-methoxyphenyl)-phosphino]propane in example 13, except that the 2-benzyloxy-1,3-dibromopropane prepared according to example 10 was used instead of 2-benzyl-1,3-dibromopropane. Yield of 2-benzyloxy-1,3-bis[bis(2-methoxyphenyl)phosphino]propane 91%.

### Example 17

2-ethoxymethoxy-1,3-bis[bis(2-methoxyphenyl)-phosphino]propane was prepared in virtually the same manner as the 2-benzyl-1,3-bis[bis(2-methoxyphenyl)-phosphino]propane in example 13, except that the 2-ethoxymethoxy-1,3-dichloropropane prepared according to example 11 was used instead of 2-benzyl-1,3-dibromopropane. Yield of 2-ethoxymethoxy-1,3-bis[bis-(2-methoxyphenyl)phosphino]propane 20%.

### Example 18

2-(2,4,6-trimethylbenzyloxy)-1,3-bis[bis(2-methoxyphenyl)phosphino]propane was prepared in virtually the same manner as the 2-benzyl-1,3-bis[bis-(2-methoxyphenyl)phosphino]propane in example 13, except that the 2-(2,4,6-trimethylbenzyloxy)-1,3-dibromopropane prepared according to example 12 was used instead of 2-benzyl-1,3-dibromopropane. Yield of 2-(2,4,6-trimethylbenzyloxy)-1,3-bis[bis-(2-methoxyphenyl)phosphino]propane 60%.

### Example 19

A carbon monoxide/ethene/propene terpolymer was prepared as follows. Into a stirred autoclave with a volume of 300 ml a catalyst solution was introduced containing:
- 135: ml methanol,
- 4: ml acetone,
- 0.009: mmol palladium acetate,
- 0.19: mmol trifluoroacetic acid, and
- 0.01: mmol 1,3-bis(diphenylphosphino)propane.

The air in the autoclave was removed by pumping carbon monoxide into the autoclave to a pressure of 50 bar followed by releasing the pressure and then repeating this processs twice. After the autoclave had been heated to 80 °C, 25 bar carbon monoxide was pumped in, then 10 bar propene and finally 15 bar ethene. During the polymerization the pressure in the autoclave was kept at 52 bar by pumping in a 1:1 carbon monoxide/ethene mixture. After 3.1 hours the polymerization was ended by cooling to room temperature and releasing the pressure. The terpolymer was filtered off, washed with methanol and dried. 13.0 g terpolymer was obtained. The reaction rate was 4.4 kg terpolymer/(g palladium.hour). The terpolymer had an LVN(60) of 0.5 dl/g.

### Example 20

A carbon monoxide/ethene/propene terpolymer was prepared in virtually the same manner as in example 19, but with the following differences:
a) the catalyst solution contained 0.01 mmol 2-benzyloxy-1,3-bis(diphenylphosphino)propane instead of 1,3-bis(diphenylphosphino)propane,
b) the reaction temperature was 85 °C instead of 80 °C, and
c) the reaction time was 2.7 hours instead of 3.1 hours.

7.6 g terpolymer was obtained. The reaction rate was 3.0 kg terpolymer/(g palladium.hour). The terpolymer had an LVN(60) of 0.3 dl/g.

### Example 21

A carbon monoxide/ethene/propene terpolymer was prepared in virtually the same manner as in example 19, but with the following differences:
a) the catalyst solution contained 0.01 mmol 1,3-bis[bis(2-methoxyphenyl)phosphino]propane instead of 1,3-bis(diphenylphosphino)propane,
b) the reaction temperature was 85 °C instead of 80 °C, and
c) the reaction time was 2.9 hours instead of 3.1 hours.

13.1 g terpolymer was obtained. The reaction rate was 4.6 kg terpolymer/(g palladium.hour). The terpolymer had an LVN(60) of 1.1 dl/g.

### Example 22

A carbon monoxide/ethene/propene terpolymer was prepared in virtually the same manner as in example 19, but with the following differences:
a) the catalyst solution contained 0.01 mmol of the 2-(2,4,6-trimethylbenzyloxy)-1,3-bis[bis(2-methoxyphenyl)phosphino]propane prepared according to example 18 instead of 1,3-bis(diphenylphosphino)propane,
b) the reaction temperature was 85 °C instead of 80 °C, and
c) the reaction time was 3.2 hours instead of 3.1 hours.

16.6 g terpolymer was obtained. The reaction rate was 5.4 kg terpolymer/(g palladium.hour). The terpolymer had an LVN(60) of 2.2 dl/g.

### Example 23

A carbon monoxide/ethene/propene terpolymer was prepared in virtually the same manner as in example 19, but with the following differences:
a) the catalyst solution contained 0.01 mmol of the 2-benzyl-1,3-bis[bis(2-methoxyphenyl)phosphino]-propane prepared according to example 13 instead of 1,3-bis(diphenylphosphino)propane,
b) the reaction temperature was 85 °C instead of 80 °C, and
c) the reaction time was 3.4 hours instead of 3.1 hours.

19.5 g terpolymer was obtained. The reaction rate was 6.0 kg terpolymer/(g palladium.hour). The terpolymer had an LVN(60) of 1.8 dl/g.

### Example 24

A carbon monoxide/ethene/propene terpolymer was prepared in virtually the same manner as in example 19, but with the following differences:
a) the catalyst solution contained 0.01 mmol of the 2-benzyloxy-1,3-bis[bis(2-methoxyphenyl)phosphino]propane prepared according to example 16 instead of 1,3-bis(diphenylphosphino)propane,
b) the reaction temperature was 85 °C instead of 80 °C, and
c) the reaction time was 2.5 hours instead of 3.1 hours.

20.8 g terpolymer was obtained. The reaction rate was 8.7 kg terpolymer/(g palladium.hour). The terpolymer had an LVN(60) of 1.4 dl/g.

### Example 25

A carbon monoxide/ethene/propene terpolymer was prepared in virtually the same manner as in example 19, but with the following differences:
a) the catalyst solution contained 0.01 mmol of the 2-propyl-1,3-bis[bis(2-methoxyphenyl)phosphino]-propane prepared according to example 15 instead of 1,3-bis(diphenylphosphino)propane,
b) the reaction temperature was 85 °C instead of 80 °C, and
c) the reaction time was 2.2 hours instead of 3.1 hours.

12.5 g terpolymer was obtained. The reaction rate was 5.8 kg terpolymer/(g palladium.hour). The terpolymer had an LVN(60) of 1.8 dl/g.

### Example 26

A carbon monoxide/ethene/propene terpolymer was prepared in virtually the same manner as in example 19, but with the following differences:
a) the catalyst solution contained:
   135 ml methanol,
   2 ml acetone,
   0.0045 mmol palladium acetate,
   0.09 mmol trifluoroacetic acid, and
   0.005 mmol 2-(6-hydroxyhexyl)-1,3-bis[bis(2-methoxyphenyl)phosphino]propane.
b) the reaction temperature was 85 °C instead of 80 °C, and
c) the reaction time was 5.7 hours instead of 3.1 hours.

24.5 g terpolymer was obtained. The reaction rate was 9.0 kg terpolymer/(g palladium.hour). The terpolymer had an LVN(60) of 2.4 dl/g.

Of the examples 1-26, examples 12-18 and 22-26 are according to the invention. Example 12 relates to the preparation of a novel dihalide according to the invention that was used in the preparation of a novel bisphosphine according to example 18. Examples 13-18 relate to the preparation of the novel bisphosphines according to the invention. Examples 22-26 relate to the preparation of carbon monoxide/ethene/propene terpolymers using the novel catalyst compositions according to the invention. Examples 1-11 and 19-21 fall outside the scope of the invention. Examples 1-11 relate to the preparation of the dihalides with the general formula CH₂X-CHR⁴-CH₂X which were used in the preparation of the novel bisphosphines according to examples 13-17. Examples 19-21 relate to the preparation of carbon monoxide/ethene/propene polymers using catalyst compositions containing bisphosphines that did not satisfy the general formula (R²)₂P-R³-P(R²)₂.

By means of ¹³C-NMR analysis it was established that the carbon monoxide/ethene/propene terpolymers prepared according to examples 19-26 consisted of linear chains in which the units from carbon monoxide on the one hand and the units from ethene and propene on the other hand occurred in an alternating arrangement. In the polymer chains the units from ethene and propene were distributed in a random manner.

The favourable influence on the behaviour of the catalyst compositions obtained if a bisphosphine having the general formula (R¹)₂P-R-P(R¹)₂ is replaced by a bisphosphine having the general formula (R²)₂P-R-P(R²)₂ can be seen by comparison of the results of examples 19 and 21 (a higher reaction rate with a higher average molecular weight).

The adverse effect on the behaviour of the catalyst compositions which occurs if a bisphosphine having the general formula (R¹)₂P-R-P(R¹)₂ is replaced by a bisphosphine having the general formula (R¹)₂P-R³-P(R¹)₂ can be seen by comparison of the results of examples 19 and 20 (a lower reaction rate together with a lower average molecular weight).

The further improvement of the hehaviour of the catalyst compositions which can be achieved by including according to the invention a bisphosphine having the general formula (R²)₂P-R³-P(R²)₂ can be clearly seen from a comparison of the results of examples 22-26 with those of examples 21 (in all cases, polymers with a higher average molecular weight were obtained at a higher reaction rate).

## Claims (Claims for the following Contracting State(s): BE, CH, DE, FR, GB, IT, LI, NL)

1. Catalyst compositions, characterized in that they contain a Group VIII metal and a bisphosphine with the general formula (R²)₂P-R³-P(R²)₂ in which R² represents an aryl group containing at least one alkoxy substituent at the ortho position relative to the phosphorus atom to which the aryl group is linked and in which R³ is a divalent bridge group containing just three carbon atoms in the bridge, of which the central carbon atom forms part of a -CHR⁴-group in which R⁴ represents a monovalent substituent comprising carbon and hydrogen and optionally oxygen.

2. Catalyst compositions according to claim 1, characterized in that they contain the bisphosphine in a quantity of 0.5-2 mol per gat Group VIII metal.

3. Catalyst compositions according to claim 1 or 2, characterized in that they contain a bisphosphine in which the R² group is a phenyl group which contains at least one methoxy substituent in the ortho position relative to the phosphorus atom to which the phenyl group is linked.

4. Catalyst compositions according to claim 3, characterized in that they contain a bisphosphine in which the R² group is a 2-methoxyphenyl group.

5. Catalyst compositions according to one or more of claims 1-4, characterized in that they contain a bisphosphine in which the R³ bridge group is a -CH₂-CHR⁴-CH₂- group.

6. Catalyst compositions according to one or more of claims 1-5, characterized in that they contain a bisphosphine in which the R⁴ group is chosen from one of the following groups: an aryl group such as a phenyl group, an aralkyl group such as a benzyl group, alkyl groups such as the propyl group, aralkyloxy groups such as the benzyloxy group or a 2,4,6-trimethylbenzyloxy group, an alkoxyalkoxy group such as a ethoxymethoxy group and a hydroxyalkyl group such as a 6-hydroxyhexyl group.

7. Catalyst compositions according to one or more of claims 1-6, characterized in that the Group VIII metal is palladium.

8. Catalyst compositions according to one or more of claims 1-7, characterized in that the composition contains in addition an anion of an acid with a pKa of less than 4 in a quantity of 1-100 mol per gat Group VIII metal.

9. Process for the preparation of polymers, characterized in that a mixture of carbon monoxide with one or more olefinically unsaturated compounds is contacted with a catalyst composition according to one or more of claims 1-8.

10. Process according to claim 9, characterized in that the monomers are contacted with a solution of the catalyst composition in a diluent in which the polymers are almost or completely insoluble, such as methanol.

11. Process according to claim 9 or 10, characterized in that it is carried out at a temperature of 25-150 °C, a pressure of 2-150 bar and a molar ratio of the olefinically unsaturated compounds relative to carbon monoxide in the mixture to be polymerized of 10:1 to 1:10 and that per mol of olefinically unsaturated compound to be polymerized a quantity of catalyst composition is used which contains 10⁻⁷-10⁻³ gat Group VIII metal.

12. Bisphosphines with the general formula (R²)₂P-CH₂-CHR⁴-CH₂-P(R²)₂ in which R² represents an aryl group containing at least one alkoxy substituent at the ortho position relative to the phosphorus atom to which the aryl group is linked and in which R⁴ is an aryl, an aralkyl, an alkyl, an aralkyloxy or an alkoxyalkoxy group.

13. Bisphosphines according to claim 12, characterized in that the R² group is a 2-methoxyphenyl group and the R⁴ group is chosen from a phenyl group, a benzyl group, a propyl group, a benzyloxy group, a 2,4,6-trimethylbenzyloxy group and an ethoxymethoxy group.

14. Dihalide of the formula CH₂X-CHR⁴-CH₂X, characterized by being 2-(2,4,6-trimethylbenzyloxy)-1,3-dibromopropane.

15. Process for the preparation of the dihalide according to claim 14, characterized in that bromomethyl-2,4,6-trimethylbenzene is reacted with epibromohydrin.

16. Process for the preparation of bisphosphines according to claim 12, characterized in that an alkali metal diaryl phosphide with the general formula MP(R²)₂ in which M represents an alkali metal such as sodium is reacted with a dihalide with the general formula CH₂X-CHR⁴-CH₂X in which X represents a halogen such as chlorine or bromine.

## Claims (Claims for the following Contracting State(s): ES)

1. A process for the preparation of catalyst compositions, characterized in that the catalyst compositions are prepared by combining a Group VIII metal and a bisphosphine with the general formula (R²)₂P-R³-P(R²)₂ in which R² represents an aryl group containing at least one alkoxy substituent at the ortho position relative to the phosphorus atom to which the aryl group is linked and in which R³ is a divalent bridge group containing just three carbon atoms in the bridge, of which the central carbon atom forms part of a -CHR⁴ - group in which R⁴ represents a monovalent substituent comprising carbon and hydrogen and optionally oxygen.

2. A process according to claim 1, characterized in that the quantity of the bisphosphine amounts to 0.5-2 mol per gat Group VIII metal.

3. A process according to claim 1 or 2, characterized in that the R² group of the bisphosphine is a phenyl group which contains at least one methoxy substituent in the ortho position relative to the phosphorus atom to which the phenyl group is linked.

4. A process according to claim 3, characterized in that the R² group of the bisphosphine is a 2-methoxyphenyl group.

5. A process according to one or more of claims 1-4, characterized in that the R³ bridge group of the bisphosphine is a -CH₂-CHR⁴-CH₂- group.

6. A process according to one or more of claims 1-5, characterized in that the R⁴ group of the bisphosphine is chosen from one of the following groups: an aryl group such as a phenyl group, an aralkyl group such as a benzyl group, alkyl groups such as the propyl group, aralkyloxy groups such as the benzyloxy group or a 2,4,6-trimethylbenzyloxy group, an alkoxyalkoxy group such as a ethoxymethoxy group and a hydroxyalkyl group such as a 6-hydroxyhexyl group.

7. A process according to one or more of claims 1-6, characterized in that the Group VIII metal is palladium.

8. A process according to one or more of claims 1-7, characterized in that an anion of an acid with a pKa of less than 4 is added as an additional catalyst component in a quantity of 1-100 mol per gat Group VIII metal.

9. Process for the preparation of polymers, characterized in that a mixture of carbon monoxide with one or more olefinically unsaturated compounds is contacted with a catalyst composition obtained by a process according to one or more of claims 1-8.

10. Process according to claim 9, characterized in that the monomers are contacted with a solution of the catalyst composition in a diluent in which the polymers are almost or completely insoluble, such as methanol.

11. Process according to claim 9 or 10, characterized in that it is carried out at a temperature of 25-150 °C, a pressure of 2-150 bar and a molar ratio of the olefinically unsaturated compounds relative to carbon monoxide in the mixture to be polymerized of 10:1 to 1:10 and that per mol of olefinically unsaturated compound to be polymerized a quantity of catalyst composition is used which contains 10⁻⁷-10⁻³ gat Group VIII metal.

12. Process for the preparation of bisphosphines, characterized in that bisphosphines with the general formula (R²)₂P-CH₂-CHR⁴-CH₂-P(R²)₂ in which R² represents an aryl group containing at least one alkoxy substituent at the ortho position relative to the phosphorus atom to which the aryl group is linked and in which R⁴ is an aryl, an aralkyl, an alkyl, an aralkyloxy or an alkoxyalkoxy group, are prepared by reacting an alkali metal diaryl phosphide with the general formula MP(R²)₂ in which M represents an alkali metal such as sodium with a dihalide with the general formula CH₂X-CHR⁴-CH₂X in which X represents a halogen such as chlorine or bromine.

13. Process according to claim 12, characterized in that the R² group is a 2-methoxyphenyl group and the R⁴ group is chosen from a phenyl group, a benzyl group, a propyl group, a benzyloxy group, a 2,4,6-trimethylbenzyloxy group and an ethoxymethoxy group.

14. Process for the preparation of a dihalide, characterized in that 2-(2,4,6-trimethylbenzyloxy)-1,3-dibromopropane is prepared by reacting bromomethyl-2,4,6-trimethylbenzene with epibromohydrin.

## Patentansprüche (Patentansprüche für folgende(n) Vertragsstaat(en): BE, CH, DE, FR, GB, IT, LI, NL)

1. Katalysatorzusammensetzungen, dadurch gekennzeichnet, daß sie ein Metall der Gruppe VIII und ein Bisphosphin der allgemeinen Formel (R²)₂P-R³-P(R²)₂ enthalten, in welcher R² eine Arylgruppe mit mindestens einem Alkoxysubstituenten in der ortho-Position in bezug auf das Phosphoratom, an das die Arylgruppe gebunden ist, darstellt, und in welcher R³ eine zweiwertige Brückengruppe mit genau 3 Kohlenstoffatomen in der Brücke ist, wovon das zentrale Kohlenstoffatom einen Teil einer Gruppe -CHR⁴ bildet, in welcher R⁴ einen einwertigen Substituenten, umfassend Kohlenstoff, Wasserstoff und gegebenenfalls Sauerstoff, darstellt.

2. Katalysatorzusammensetzungen nach Anspruch 1, dadurch gekennzeichnet, daß sie das Bisphosphin in einer Menge von 0,5 bis 2 Mol je Grammatom des Metalls der Gruppe VIII enthalten.

3. Katalysatorzusammensetzungen nach Anspruch 1 oder 2 , dadurch gekennzeichnet ,daß sie ein Bisphosphin enthalten, in welchem die Gruppe R² eine Phenylgruppe ist , die mindestens einen Methoxysubstituenten in der ortho-Position in bezug auf das Phosphoratom, an das die Phenylgruppe gebunden ist, aufweist.

4. Katalysatorzusammensetzungen nach Anspruch 3, dadurch gekennzeichnet, daß sie ein Bisphosphin enthalten, in welchem die Gruppe R² eine 2-Methoxyphenylgruppe ist.

5. Katalysatorzusammensetzungen nach einem oder mehreren der Ansprüche 1 bis 4, dadurch gekennzeichnet, daß sie ein Bisphosphin enthalten, in welchem die Brückengruppe R³ eine -CH₂-CHR⁴-CH₂-Gruppe ist.

6. Katalysatorzusammensetzungen nach einem oder mehreren der Ansprüche 1 bis 5, dadurch gekennzeichnet, daß sie ein Bisphosphin enthalten, in welchem die Gruppe R⁴ ausgewählt ist aus einer der folgenden Gruppen: einer Arylgruppe, wie einer Phenylgruppe, einer Aralkylgruppe, wie einer Benzylgruppe, Alkylgruppen, wie die Propylgruppe, Aralkyloxygruppen, wie die Benzyloxygruppe oder eine 2,4,6-Trimethylbenzyloxygruppe, eine Alkoxyalkoxygruppe, wie eine Ethoxymethoxygruppe und eine Hydroxyalkylgruppe, wie eine 6-Hydroxyhexylgruppe.

7. Katalysatorzusammensetzungen nach einem oder mehreren der Ansprüche 1 bis 6 ,dadurch gekennzeichnet, daß das Metall der Gruppe VIII Palladium ist.

8. Katalysatorzusammensetzungen nach einem oder mehreren der Ansprüche 1 bis 7, dadurch gekennzeichnet ,daß die Zusammensetzung außerdem ein Anion einer Säure mit einem pKa-Wert von weniger als 4 in einer Menge von 1 bis 100 Mol je Grammatom des Metalls der Gruppe VIII enthält.

9. Verfahren zur Herstellung von Polymeren, dadurch gekennzeichnet ,daß eine Mischung von Kohlenmonoxid mit einer oder mehreren olefinisch ungesättigten Verbindung(en) mit einer Katalysatorzusammensetzung nach einem oder mehreren der Ansprüche 1 bis 8 kontaktiert wird.

10. Verfahren nach Anspruch 9, dadurch gekennzeichnet, daß die Monomere mit einer Lösung der Katalysatorzusammensetzung in einem Verdünnungsmittel, in welchem die Polymere fast oder ganz unlöslich sind, wie Methanol, kontaktiert werden.

11. Verfahren nach Anspruch 9 oder 10, dadurch gekennzeichnet, daß es bei einer Temperatur von 25 bis 150°C, einem Druck von 2 bis 150 bar und einem Molverhältnis von olefinisch ungesättigten Verbindungen in bezug auf das Kohlenmonoxid in der zu polymerisierenden Mischung von 10:1 bis 1:10 durchgeführt wird, und daß je Mol olefinisch ungesättigter, zu polymerisierender Verbindung eine Menge an Katalysatorzusammensetzung eingesetzt wird, die 10⁻⁷ bis 10⁻³ Grammatome des Metalls der Gruppe VIII enthält.

12. Bisphosphine der allgemeinen Formel (R²)P-CH₂-CHR⁴-CH₂-P(R²)₂, in welcher R² eine Arylgruppe darstellt, die mindestens einen Alkoxysubstituenten in der ortho-Position in bezug auf das Phosphoratom, an das die Arylgruppe gebunden ist, enthält und in welcher R⁴ eine Aryl-, Aralkyl-, eine Alkyl-, eine Aralkyloxy- oder eine Alkoxyalkoxygruppe ist.

13. Bisphosphine nach Anspruch 12, dadurch gekennzeichnet, daß die Gruppe R² eine 2-Methoxyphenylgruppe ist und die Gruppe R⁴ ausgewählt ist aus einer Phenylgruppe, einer Benzylgruppe, einer Propylgruppe, einer Benzyloxygruppe, einer 2,4,6-Trimethylbenzyloxygruppe und einer Ethoxymethoxygruppe.

14. Dihalogenid der Formel CH₂X-CHR⁴-CH₂X, dadurch gekennzeichnet, daß es 2-(2,4,6-Trimethylbenzyloxy)-1,3-dibrompropan ist.

15. Verfahren zur Herstellung des Dihalogenids nach Anspruch 14, dadurch gekennzeichnet ,daß Brommethyl-2,4,6-trimethylbenzol mit Epibromhydrin umgesetzt wird.

16. Verfahren zur Herstellung von Bisphosphinen nach Anspruch 12, dadurch gekennzeichnet, daß ein Alkalimetalldiarylphosphid der allgemeinen Formel MP(R²)₂, in welcher M ein Alkalimetall, wie Natrium, darstellt, mit einem Dihalogenid der allgemeinen Formel CH₂X-CHR⁴-CH₂X, in welcher X ein Halogen, wie Chlor oder Brom, ist, umgesetzt wird.

## Patentansprüche (Patentansprüche für folgende(n) Vertragsstaat(en): ES)

1. Ein Verfahren zur Herstellung von Katalysatorzusammensetzungen, dadurch gekennzeichnet, daß die Katalysatorzusammensetzungen durch Kombinieren eines Metalls der Gruppe VIII und eines Bisphosphins der allgemeinen Formel (R²)₂P-R³-P(R²)₂, in welcher R² eine Arylgruppe mit mindestens einem Alkoxysubstituenten in der ortho-Position in bezug auf das Phosphoratom, an das die Arylgruppe gebunden ist, darstellt, und in welcher R³ eine zweiwertige Brückengruppe mit genau 3 Kohlenstoffatomen in der Brücke ist, wovon das zentrale Kohlenstoffatom einen Teil einer Gruppe -CHR⁴ bildet, in welcher R⁴ einen einwertigen Substituenten, umfassend Kohlenstoff, Wasserstoff und gegebenenfalls Sauerstoff, darstellt, hergestellt werden.

2. Verfahren nach Anspruch 1, dadurch gekennzeichnet, daß das Bisphosphin in einer Menge von 0,5 bis 2 Mol je Grammatom des Metalls der Gruppe VIII eingesetzt wird.

3. Verfahren nach Anspruch 1 oder 2 , dadurch gekennzeichnet daß die Gruppe R² des Bisphosphins eine Phenylgruppe ist, die mindestens einen Methoxysubstituenten in der ortho-Position in bezug auf das Phosphoratom, an das die Phenylgruppe gebunden ist, aufweist.

4. Verfahren nach Anspruch 3, dadurch gekennzeichnet, daß die Gruppe R² des Bisphosphins eine 2-Methoxyphenylgruppe ist.

5. Verfahren nach einem oder mehreren der Ansprüche 1 bis 4, dadurch gekennzeichnet, daß die Brückengruppe R³ des Bisphosphins eine -CH₂-CHR⁴-CH₂-Gruppe ist.

6. Verfahren nach einem oder mehreren der Ansprüche 1 bis 5, dadurch gekennzeichnet, daß die Gruppe R⁴ des Bisphosphins ausgewählt ist aus einer der folgenden Gruppen: einer Arylgruppe, wie einer Phenylgruppe, einer Aralkylgruppe, wie einer Benzylgruppe, Alkylgruppen, wie die Propylgruppe, Aralkyloxygruppen, wie die Benzyloxygruppe oder eine 2,4,6-Trimethylbenzyloxygruppe, einer Alkoxyalkoxygruppe, wie eine Ethoxymethoxygruppe, und einer Hydroxyalkylgruppe, wie eine 6-Hydroxyhexylgruppe.

7. Verfahren nach einem oder mehreren der Ansprüche 1 bis 6 dadurch gekennzeichnet, daß das Metall der Gruppe VIII Palladium ist.

8. Verfahren nach einem oder mehreren der Ansprüche 1 bis 7, dadurch gekennzeichnet ,daß ein Anion einer Säure mit einem pKa-Wert von weniger als 4 in einer Menge von 1 bis 100 Mol je Grammatom des Metalls der Gruppe VIII zugegeben wird.

9. Verfahren zur Herstellung von Polymeren, dadurch gekennzeichnet ,daß eine Mischung von Kohlenmonoxid mit einer oder mehreren olefinisch ungesättigten Verbindung(en) mit einer Katalysatorzusammensetzung nach einem oder mehreren der Ansprüche 1 bis 8 kontaktiert wird.

10. Verfahren nach Anspruch 9, dadurch gekennzeichnet, daß die Monomere mit einer Lösung der Katalysatorzusammensetzung in einem Verdünnungsmittel, in welchem die Polymere fast oder ganz unlöslich sind, wie Methanol, kontaktiert werden.

11. Verfahren nach Anspruch 9 oder 10, dadurch gekennzeichnet, daß es bei einer Temperatur von 25 bis 150°C, einem Druck von 2 bis 150 bar und einem Molverhältnis von olefinisch ungesättigten Verbindungen in bezug auf das Kohlenmonoxid in der zu polymerisierenden Mischung von 10:1 bis 1:10 durchgeführt wird und daß je Mol olefinisch ungesättigter, zu polymerisierender Verbindung eine Menge an Katalysatorzusammensetzung eingesetzt wird, die 10⁻⁷ bis 10⁻³ Grammatome des Metalls der Gruppe VIII enthält.

12. Verfahren zur Herstellung von Bisphosphinen, dadurch gekennzeichnet, daß Bisphosphine der allgemeinen Formel (R²)P-CH₂-CHR⁴-CH₂-P(R²)₂, in welcher R² eine Arylgruppe darstellt, die mindestens einen Alkoxysubstituenten in der ortho-Position in bezug auf das Phosphoratom, an das die Arylgruppe gebunden ist, enthält und in welcher R⁴ eine Aryl-, Aralkyl-, eine Alkyl-, eine Aralkyloxy- oder eine Alkoxyalkoxygruppe ist, durch Umsetzen eines Alkalimetalldiarylphosphids der allgemeinen Formel MP(R²)₂, in welcher M eine Alkalimetall, wie Natrium ist, mit einem Dihalogenid der allgemeinen Formel CH₂X-CHR⁴⁻CH₂X, wobei X ein Halogen, wie Chlor oder Brom ist, hergestellt werden.

13. Verfahren nach Anspruch 12, dadurch gekennzeichnet, daß die Gruppe R² eine 2-Methoxyphenylgruppe ist und die Gruppe R⁴ ausgewählt ist aus einer Phenylgruppe, einer Benzylgruppe, einer Propylgruppe, einer Benzyloxygruppe, einer 2,4,6-Trimethylbenzyloxygruppe und einer Ethoxymethoxygruppe.

14. Verfahren zur Herstellung eines Dihalogenids, dadurch gekennzeichnet, daß 2-(2,4,6-Trimethylbenzyloxy)-1,3-dibrompropan durch Umsetzen von Brommethyl-2,4,6-trimethylbenzol mit Epibromhydrin hergestellt wird.

## Revendications (Revendications pour l'(les) Etat(s) contractant(s) suivant(s): BE, CH, DE, FR, GB, IT, LI, NL)

1. Compositions catalytiques, caractérisées en ce qu'elles renferment un métal du groupe VIII et une bisphosphine présentant la formule générale (R²)₂P-R³-P(R²)₂ dans laquelle R² représente un groupe aryle renfermant au moins un substituant alkoxy en position ortho par rapport à l'atome de carbone auquel le groupe aryle est lié et dans laquelle R³ est un groupe pontant bivalent renfermant uniquement 3 atomes de carbone dans le pont, dont l'atome de carbone central fait partie d'un groupe -CHR⁴-, dans lequel R⁴ représente un substituant monovalent comportant du carbone, de l'hydrogène et, le cas échéant de l'oxygène.

2. Compositions catalytiques selon la revendication 1, caractérisées en ce qu'elles renferment la bisphosphine en une quantité de 0,5 à 2 moles par atome-gramme métal du groupe VIII.

3. Compositions catalytiques selon la revendication 1 ou 2, caractérisées en ce qu'elles renferment une bisphosphine dans laquelle le groupe R² est un groupe phényle qui renferme au moins un substituant méthoxy en position ortho par rapport à l'atome de phosphore auquel le groupe phényle est lié.

4. Compositions catalytiques selon la revendication 3, caractérisées en ce qu'elles contiennent une bisphosphine dans laquelle le groupe R² est un groupe 2-méthoxyphényle.

5. Compositions catalytiques selon une ou plus des revendications 1 à 4, caractérisées en ce qu'elles renferment une bisphosphine dans laquelle le groupe pontant R³ est un groupe -CH₂-CHR⁴-CH₂-.

6. Compositions catalytiques selon une ou plus d'une des revendications 1 à 5, caractérisées en ce qu'elles contiennent une bisphosphine dans laquelle R⁴ est choisi parmi l'un des groupes suivants: un groupe aryle tel qu'un groupe phényle, un groupe aralkyle tel qu'un groupe benzyle, des groupes alkyloly tels que le groupe propyle, des groupes aralkyle tels que le groupe benzyloxy ou bien un groupe 2,4,6-triméthylbenzyloxy, un groupe alkoxyalkoxy tel qu'un groupe éthoxyméthoxy et un groupe hydroxyalkyle tel qu'un groupe 6-hydroxyhexyle.

7. Compositions catalytiques selon une ou plus d'une des revendications 1 à 6, caractérisées en ce que le métal du groupe VIII est le palladium.

8. Compositions catalytiques selon une ou plus d'une des revendications 1 à 7, caractérisées en ce que la composition renferme en outre un anion d'un acide présentant un pKa inférieur à 4 dans une quantité de 1 à 100 moles par atome-gramme métal du groupe VIII.

9. Procédé pour la préparation de polymères, caractérisé en ce qu'un mélange de monoxyde de carbone avec un ou plus d'un composé à insaturation oléfinique est mis en contact avec une composition catalytique selon une ou plus d'une des revendications 1 à 8.

10. Procédé selon la revendication 9, caractérisé en ce que les monomères sont mis en contact avec une solution de la composition catalytique dans un diluant dans lequel les polymères sont presque ou complètement insolubles, tels que le méthanol.

11. Procédé selon la revendication 9 ou 10, caractérisé en ce qu'il est mis en oeuvre à une température de 25 à 150°C, sous une pression de 2 à 150 bars et avec un rapport molaire des composés à insaturation oléfinique par rapport au monoxyde de carbone dans le mélange devant être polymérisé, de 10:1 à 1:10 et que, par mole de composé à insaturation oléfinique devant être polymérisé, on utilise une quantité de composition catalytique qui renferme 10⁻⁷ à 10⁻³ atome-gramme de métal du groupe VIII.

12. Bisphosphines correspondant à la formule générale (R²)₂P-CH₂-CHR⁴-CH₂-P(R²)₂ dans laquelle R² représente un groupe aryle renfermant au moins un substituant alkoxy en position ortho par rapport à l'atome de phosphore auquel le groupe aryle est lié et dans laquelle R⁴ est un groupe aryle, aralkyle, alkyle, aralkyloxy ou alkoxyalkoxy.

13. Bisphosphines selon la revendication 12, caractérisées en ce que le groupe R² est un groupe 2-méthoxyphényle et que le groupe R⁴ est choisi parmi un groupe phényle, un groupe benzyle, un groupe propyle, un groupe benzyloxy, un groupe 2,4,6-triméthylbenzyloxy et un groupe éthoxyméthoxy.

14. Dihalogénure de la formule CH₂X-CHR⁴-CH₂X, caractérisé en ce que c'est du 2-(2,4,6-triméthylbenzyloxy)-1,3-dibromopropane.

15. Procédé pour la prépration du dihalogénure selon la revendication 14, caractérisé en ce que l'on fait agir le bromoéthyl-2,4,6-triméthylbenzène avec de l'épibromohydrine.

16. Procédé pour la préparation de bisphosphines selon la revendication 12, caractérisé en ce qu'un diaryl phosphure de métal alcalin correspondant à la formule générale MP(R²)₂ dans laquelle M représente un métal alcalin tel que le sodium est mis à réagir avec un dihalogénure de la formule générale CH₂X-CHR⁴-CH₂X dans laquelle X représente un halogène tel que du chlore ou du brome.

## Revendications (Revendications pour l'(les) Etat(s) contractant(s) suivant(s): ES)

1. Un procédé pour la préparation de compositions catalytiques, caractérisé en ce que les compositions catalytiques sont préparées en combinant un métal du groupe VIII et une bisphosphine présentant la formule générale (R²)₂P-R³-P(R²)₂ dans laquelle R² représente un groupe aryle renfermant au moins un substituant alkoxy en position ortho par rapport à l'atome de carbone auquel le groupe aryle est lié et dans laquelle R³ est un groupe pontant bivalent renfermant uniquement 3 atomes de carbone dans le pont, dont l'atome de carbone central fait partie d'un groupe -CHR⁴-, dans lequel R⁴ représente un substituant monovalent comportant du carbone, de l'hydrogène et, le cas échéant de l'oxygène.

2. Un procédé selon la revendication 1, caractérisé en ce que la quantité de bisphosphine s'élève à 0,5 à 2 mole par atome-gramme de métal du groupe VIII.

3. Un procédé selon la revendication 1 ou 2, caractérisé en ce que le groupe R² de la bisphosphine est un un groupe phényle qui renferme au moins un substituant méthoxy en position ortho par rapport à l'atome de phosphore auquel le groupe phényle est lié.

4. Un procédé selon la revendication 3, caractérisé en ce que le groupe R² de la bisphosphine est un groupe 2-méthoxyphényle.

5. Un procédé selon une ou plus d'une des revendications 1 à 4, caractérisé en ce que le groupe pontant R³ de la bisphosphine est un groupe -CH₂-CHR⁴-CH₂-.

6. Un procédé selon une ou plus d'une des revendications 1 à 5, caractérisé en ce que le groupe R⁴ de la bisphosphine est choisi parmi l'un des groupes suivants: un groupe aryle tel qu'un groupe phényle, un groupe aralkyle tel qu'un groupe benzyle, des groupes alkyle tels que le groupe propyle, des groupes aralkyloxy tels que le groupe benzyloxy ou bien un groupe 2,4,6-triméthylbenzyloxy, un groupe alkoxyalkoxy tel qu'un groupe éthoxyméthoxy et un groupe hydroxyalkyle tel qu'un groupe 6-hydroxyhexyle.

7. Un procédé selon une ou plus d'une des revendications 1 à 6, caractérisées en ce que le métal du groupe VIII est le palladium.

8. Un procédé selon une ou plus d'une des revendications 1 à 7, caractérisé en ce qu'un anion d'un acide présentant un pKa inférieur à 4 est ajouté en tant que composant catalytique supplémentaire en une quantité de 1 à 100 moles par atome-gramme de métal du groupe VIII.

9. Procédé pour la préparation de polymères, caractérisé en ce qu'un mélange de monoxyde de carbone avec un ou plus d'un composé à insaturation oléfinique est mis en contact avec une composition catalytique selon une ou plus d'une des revendications 1 à 8.

10. Procédé selon la revendication 9, caractérisé en ce que les monomères sont mis en contact avec une solution de la composition catalytique dans un diluant dans lequel les polymères sont presque ou complètement insolubles, tels que le méthanol.

11. Procédé selon la revendication 9 ou 10, caractérisé en ce qu'il est mis en oeuvre à une température de 25 à 150°C, sous une pression de 2 à 150 bars et avec un rapport molaire des composés à insaturation oléfinique par rapport au monoxyde de carbone dans le mélange devant être polymérisé, de 10:1 à 1:10 et que, par mole de composé à insaturation oléfinique devant être polymérisé, on utilise une quantité de composition catalytique qui renferme 10⁻⁷ à 10⁻³ atome-gramme de métal du groupe VIII.

12. Procédé pour la préparation de bisphosphines, caractérisé en ce que des bisphosphines présentant la formule générale (R²)₂P-CH₂-CHR⁴-CH₂P(R²)₂ dans laquelle R² représente un groupe aryle renfermant au moins un substituant alkoxy en position ortho par rapport à l'atome de phosphore auquel le groupe aryle est lié et dans laquelle R⁴ est un groupe aryle, aralkyle, alkyle, aralkyloxy ou alkoxyalkoxy, sont préparés en faisant réagir un diaryl phosphure de métal alcalin de formule générale MP(R²)₂ dans laquelle M représente un métal alcalin tel que le sodium avec un dihalogénure de formule générale CH₂X-CHR⁴-CH₂X dans laquelle X représente un halogène tel que du chlore ou du brome.

13. Procédé selon la revendication 12, caractérisé en ce que en ce que le groupe R² est un groupe 2-méthoxyphényle et que le groupe R⁴ est choisi parmi un groupe phényle, un groupe benzyle, un groupe propyle, un groupe benzyloxy, un groupe 2,4,6-triméthylbenzyloxy et un groupe éthoxyméthoxy.

14. Procédé selon la préparation d'un dihalogénure caractérisé en que ce du 2-(2,4,6-triméthylbenzyloxy)-1,3-dibromopropane est préparé par réaction avec du bromoéthyl-2,4-6-triméthylbenzène avec de la épibromohydrine.
